# EUROPEAN PATENT APPLICATION

(11) **EP 4 401 281 A1**
(43) Date of publication of application: **17.07.2024**
(21) Application number: 23151308.6
(22) Date of filing: 12.01.2023
(51) Int. Cl.: H02J 9/06, H02J 9/00

(54) **EMERGENCY CONVERTER WITH A POWER SAVING FUNCTION**

(71) Applicant: Tridonic GmbH & Co. KG, 6851 Dornbirn (AT)
(72) Inventor: Santiago, Alekssander, 6850 Dornbirn (AT); Hannaby, Mark, 6850 Dornbirn (AT)
(74) Representative: Beder, Jens

(57) **Abstract**

The present invention relates to an emergency converter comprising an energy storage device (7) or an energy storage interface configured to connect the energy storage device (7) to the emergency converter (1), a first converter circuit (8) configured to provide a supply voltage and/or current to an illuminant (2) using energy stored in the energy storage device (7), a charging circuit (11) configured to charge the energy storage device (7), a second converter circuit (10) configured to provide a supply voltage and/or current to the charging circuit (11) using mains supply, and a control circuit (12) configured to deactivate the second converter circuit (10), and to activate the second converter circuit (10) when the energy storage device (7) is to be charged, wherein the energy storage device (7) or another energy storage supply power to the control circuit (12).

## Description

The invention is in the field of emergency lighting devices. In particular, the invention relates to an emergency converter and an emergency luminaire capable of operating in non-maintained lighting mode.

In emergency light systems, converter devices (converters, ballasts, driver devices) are used for providing a supply voltage and/or current to an emergency light for a predetermined time in case mains supply fails. The emergency light is used for a conventional lighting as well as for the emergency lighting in the maintained lighting mode, wherein the voltage supply for the converter device is maintained in case of a mains supply failure for a rated service time using energy stored in an energy storage device such as a rechargeable battery. The rated service time defines battery discharge duration during which time the emergency converter is required to drive the emergency light with a predetermined drive current. The maximum possible discharge duration depends on the emergency light and the capacity of the rechargeable battery.

In the non-maintained lighting mode, except for test purposes, the emergency light is only used for the emergency lighting, i.e., the emergency light is only switched on if the mains supply fails and the main lighting drivers are not supplied with power. Although the emergency light is not switched on when mains supply is present, the emergency luminaire consumes energy to detect a mains supply failure and to maintain a predetermined charge level of the battery or even to monitor the battery status. Since the battery is quickly recharged, especially if there has been no emergency operation or test, low-energy-intensive monitoring functions are performed most of the time in the non-maintained lighting mode.

However, the power supply of monitoring circuits via the mains supply requires a conversion of the mains voltage by, for example, a switching power supply (AC/DC converter) or an isolated power supply/converter, which also consumes energy.

It is an object of the present invention to provide an apparatus and a method, which reduce the above problems. In particular, an object of the present invention is to provide an emergency converter and an emergency luminaire that can achieve low power consumption with low effort and low cost.

This object is achieved by the emergency converter and the emergency luminaire according to the enclosed independent claims. Advantageous features of the present invention are defined in the corresponding subclaims.

According to the present invention, an emergency converter comprises an energy storage device and/or an energy storage interface configured to connect the energy storage device to the emergency converter, a first converter circuit configured to provide a supply voltage and/or current to an illuminant using energy stored in the energy storage device, a charging circuit configured to charge the energy storage device, a second converter circuit configured to provide a supply voltage and/or current to the charging circuit using mains supply and a control circuit. The control circuit is configured to deactivate the second converter circuit, to determine whether the energy storage device is to be charged and to activate the second converter circuit when the energy storage device is to be charged, wherein the emergency converter is configured to supply power to the control circuit using the energy storage device or another energy storage. The other energy storage can be a non-rechargeable battery, a capacitor or a rechargeable battery connected to or contained within the emergency converter.

Since the control circuit is not powered by the mains voltage, all or a part of the converters (e.g., converter of an active PFC circuit or other DC-to-DC converters connected to it) can be switched off to save energy.

The control circuit can be configured to determine, during the second converter circuit is deactivated, whether or not the mains supply fails and to activate the first converter circuit to provide the supply voltage and/or current to the illuminant when the mains supply fails.

The emergency converter can comprise an electrical grid monitoring circuit that is directly or indirectly connected to the mains supply to detect a failure of the mains supply, wherein the control circuit determines that the mains supply fails when the failure of the mains supply is detected by the electrical grid monitoring circuit.

Alternatively or in addition, an external device can determine the failure of mains supply and indicate it to the emergency converter by a signal, wherein the emergency converter comprises a wired or wireless interface configured to receive the signal and the control circuit determines that the mains supply fails when the signal is received.

The control circuit can be configured to detect, during the second converter circuit is deactivated, the state of charge of the energy storage device and to determine whether the energy storage device is to be charged based on the detected state of charge. The same operation can be performed for the rechargeable battery or the capacitor if equipped.

The energy storage device can be charged at predetermined time intervals to keep the charge level above a certain limit, especially if its discharge rate is constant/known. I.e., the energy storage device is to be charged at predetermined time intervals with a certain duration. For this, the control circuit comprises a timer configured to generate a start signal at the predetermined time intervals and activates the second converter circuit and the charging circuit when the start signal is generated/output by the timer. The same applies to the rechargeable battery or the capacitor, if equipped.

An emergency lighting system may need to be tested at predefined intervals by performing function and/or operation endurance tests. During the function test, which typically takes about five seconds, the function of the energy storage device, the illuminant and the emergency converter are tested. A function test is initiated for example by operating a test switch arranged at or externally to the emergency converter. In addition to the functions tested in the function test, the capacity of the battery is tested in the operation endurance test (duration test) by operating the illuminant or the emergency lamp with the battery for 2/3 of its rated operating time of, e.g., one or three hours. Once the time elapses, the test is ended. The time interval (e.g., weekly/monthly) between two successive functional tests is longer than the time interval (e.g., annually) between two successive operation endurance tests.

The control circuit can be configured to detect, during the second converter circuit is deactivates, a presence of a test request signal, to activate the second converter circuit when the presence of a test request signal is detected and to start a test (function or operation duration test) assigned to the test request signal.

The second converter circuit can be deactivated by disconnecting the second converter circuit from the mains supply and/or by switching off its control. For this, the emergency converter can comprise a switch (e.g., transistor, relay) controlled by the control circuit and configured to disconnect the second converter circuit from the mains supply and/or a control means configured to control the second converter circuit, wherein the control circuit is configured to switch off the control means or to control the control means to stop the operation of the second converter circuit when the second converter circuit is to be deactivated.

The control circuit can be configured to output a control signal to, for example, the switch or the control means, as long as the second converter circuit is to be (de)activated. Alternatively, the control circuit can be configured to output a first pulse signal when the second converter circuit is to be deactivated and a second pulse signal when the second converter circuit is to be activated, wherein the emergency converter further comprises a latch circuit configured to receive the first and the second signal, to output, when the first pulse signal is received, the control signal signaling that the second converter circuit is to be deactivated (or activated) and to output the control signal until the second pulse signal is received.

The emergency converter can comprise an isolation barrier between high voltages on a mains supply side (primary side) and low voltages on a low voltage side (secondary side), for example safety extra low voltage (SELV) towards the illuminant and the battery. The control circuit can be located on the (secondary) low voltage side and the latch circuit can be located on the (primary) mains supply side, wherein the emergency converter can comprise a first optocoupler, relay or transformer configured to transfer the first pulse signal across the isolation barrier and a second optocoupler, relay or transformer configured to transfer the second pulse signal across the isolation barrier.

A dedicated transformer can be used to create the isolation barrier. Alternatively, the second converter circuit or another converter circuit can be a flyback converter providing the isolation barrier.

The emergency converter can comprise a rectifier circuit configured to generate DC voltage and DC current from an AC voltage provided by the mains supply and to output the DC voltage/current, at an output of the rectifier circuit, to the second converter circuit or a converter circuit upstream thereof.

The latch circuit can be supplied with the DC voltage provided by the energy storage device, the rechargeable battery or the capacitor. Alternatively, the latch circuit can be supplied with the DC voltage generated by the rectifier circuit in order to reduce the need to recharge the energy storage device, the rechargeable battery or the capacitor. Preferably, the latch circuit can comprise a first current path of a first resistor and a first switch connected in series, wherein the first current path is connected in parallel to the output of the rectifier circuit and the first switch is controlled by the first pulse signal, a second current path of a second switch, a second resistor and a first capacitor connected in series, wherein the second current path is connected in parallel to the output of the rectifier circuit and the second switch is controlled by the voltage across the first resistor, a third current path of a third switch and a third resistor connected in series, wherein the third current path is connected in parallel to the first switch, the third switch is controlled by a voltage across the first capacitor second and/or the second resistor and a voltage across the third resistor is the control signal, and a fourth switch connected in parallel to the second resistor and the first capacitor, wherein the fourth switch is controlled by the second pulse signal. The switches can be bipolar transistors and/or field effect transistors.

The switch for (de)activating the second converter circuit and/or its control means can be controlled directly or indirectly by the control signal output by the latch circuit.

According to the present invention, an emergency luminaire comprises the described emergency converter.

Embodiments of the invention are discussed in detail with reference to the enclosed figures, in which
- Fig. 1: shows a simplified block diagram of parts of an emergency light system with an emergency converter and an emergency lighting means according to a first embodiment of the present invention,
- Fig. 2: shows a simplified block diagram of parts of an emergency light system with an emergency converter and an emergency lighting means according to a second embodiment of the present invention, and
- Fig. 3: shows the latch circuit of the emergency converter shown in Fig. 2.

In the figures, same reference numbers denote same or equivalent structures. The explanation of structures with same reference numbers in different figures is avoided where deemed possible for sake of conciseness.

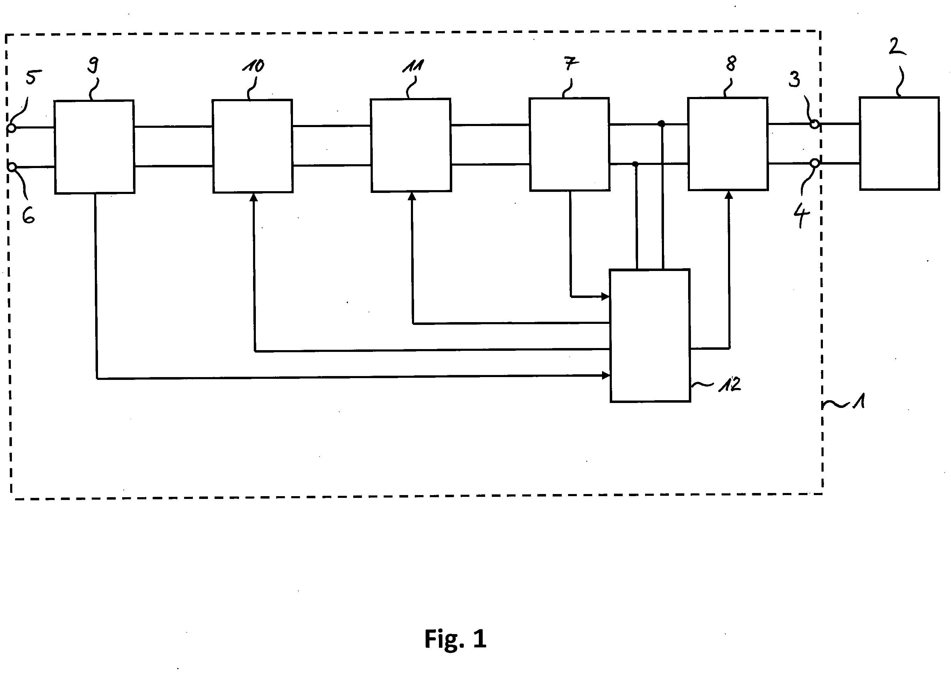

Fig. 1 shows an emergency lighting system with an emergency converter 1 detachably connected to a LED lighting device 2 (emergency lighting means). The parts shown in Fig. 1 can be housed in an emergency luminaire. The emergency converter 1 comprises a light device terminal 3, 4 (connectors) for connecting the LED lighting device 2 to the emergency converter 1, mains terminal 5, 6 (connectors) for connecting the emergency converter 1 to the mains supply, an energy storage device 7 and a LED driver 8 for generating a LED drive current using energy stored in the energy storage device 7. The LED drive current generated by the LED driver 8 is output via the light device terminal 3, 4 to the LED lighting device 2 and the LED lighting device 2 fed with the LED light current emits light from one or more LEDs (not shown). The emergency converter 1 shown in Fig. 1 further comprises a rectifier and grid monitoring unit 9 connected to the mains terminal 5, 6, a power supply unit 10 supplied with DC voltage from the rectifier and grid monitoring unit 9, a charging circuitry 11 for the energy storage device 7 and a control circuit 12, which is advantageously a microcontroller circuit or a dedicated application specific integrated circuit (ASIC).

The control circuit 12 determines continuously or at certain times whether the energy storage device 7 is to be charged or not, wherein the control circuit 12 obtains information on the energy storage device 7 (e.g., type, open circuit voltage, temperature), determines the state of charge based on the information, compares the determined state of charge with a first threshold (e.g., 80%) and starts a charging process of the energy storage device 7 by activating the charging circuitry 11 if the state of charge is below the first threshold. The charging circuitry 11 or the control circuit 12 can terminate the charging process after a certain time or when the state of charge exceeds a second threshold. During charging, the charging circuit 11 is supplied with power by the power supply unit 10, which includes at least one DC-to-CD converter for generating a constant operating voltage for the charging circuit 11 using the DC voltage generated by the rectifier and grid-monitoring unit 9. In addition, an active Power-factor correction (PFC) circuit can be a part of the rectifier and grid-monitoring unit 9 or the power supply unit 10 and/or the rectifier and grid-monitoring unit 9 can include filters to control electromagnetic interference (EMI) and ensure electromagnetic compatibility (EMC).

The emergency lighting system shown in Fig. 1 is configured to operate at least in the non-maintained lighting mode, in which the LED driver 8 is switched off (deactivated) if no mains failure is detected by the rectifier and mains monitoring unit 9. When the rectifier and mains monitoring unit 9 detects mains failure and reports it to the control circuit 12, the control circuit 12 activates the LED driver 8 to generate the LED drive current, as described above.

According to the present invention, the control circuit 12 is configured to switch off (deactivate) the power supply unit 10 and thus the charging circuitry 11 in order to save energy in the non-maintained lighting mode. In an embodiment, the control circuit 12 deactivates the power supply unit 10 after the charging process is terminated, wherein the power supply unit 10 is supplied with power from the energy storage unit 7 at least while the power supply unit 10 is deactivated. In this way, the control circuit 12 can monitor the state of charge and the rectifier and mains monitoring unit 9 even when the power supply unit 10 is deactivated in order to start the charging process of the energy storage device 7 by activating the power supply unit 10 and the charging circuitry 11 if the state of charge is below the first threshold or to start the LED driver 8 to generate the LED drive current if the rectifier and mains monitoring unit 9 detects mains failure.

The power supply unit 10 can be deactivated by disconnecting the power supply unit 10 from the DC input voltage or by merely stopping the voltage conversion of the DC-to-CD converter, wherein the power supply unit 10 comprises a switch, such as a transistor or relay (not shown), controlled by the control circuit 10 and configured to disconnect the power supply unit 10 from the rectifier and mains monitoring unit 9 or the control circuit 10 controls a control means of the power supply unit 10, such as a microcontroller (not shown), to stop the operation of the DC-to-CD converter.

The energy storage device 7 shown in Fig. 1 is a part of the emergency converter 1 and supplies the control circuit 10 with energy. Alternatively, the emergency converter 1 can comprise an energy storage interface for connecting the energy storage device 7 to the emergency converter 1 and/or can comprise an internal energy storage that supplies energy to the control circuit 12. The internal energy storage can be a capacitor or rechargeable/non-rechargeable battery, wherein the power supply unit 10, the charging circuitry 11 or the energy storage device 7 charges the capacitor or the rechargeable battery. In this way, power can be supplied to the control circuit 10 even when the energy storage device 7 is not connected or operational.

The control circuit 12 activates the LED driver 8 to generate the LED drive current when the rectifier and mains monitoring unit 9 detects mains failure. In addition or alternatively, the emergency converter 1 can comprise a wired or wireless interface configured to receive at least one of a signal indicating mains failure, a signal indicating the maintained lighting mode, a signal indicating the non-maintained lighting mode, a signal indicating a function test, a indicating an operation endurance test, a switch-on signal, a switch-off signal and a dimming signal.

The control circuit 12 can be configured to determine that the mains supply fails when the signal indicating mains failure is received, to activate the power supply unit 10 and the LED driver 8 to generate the LED drive current based on the constant operating voltage generated from the power supply unit 10 when the signal indicating the maintained lighting mode is received, to operate/change in the non-maintained lighting mode when the signal indicating the non-maintained lighting mode is received, to perform a function test when the signal indicating the function test is received, to perform an operation endurance test when the signal indicating the operation endurance is received, to activate at least the LED driver 8 to generate the LED drive current when the switch-on signal is received, to deactivate at least the LED driver 8 when the switch-off signal is received signal and to control the LED driver 8 to generate a LED drive current assigned to the dimming level of the dimming signal when the dimming signal is received. The interface can be a DALI-interface.

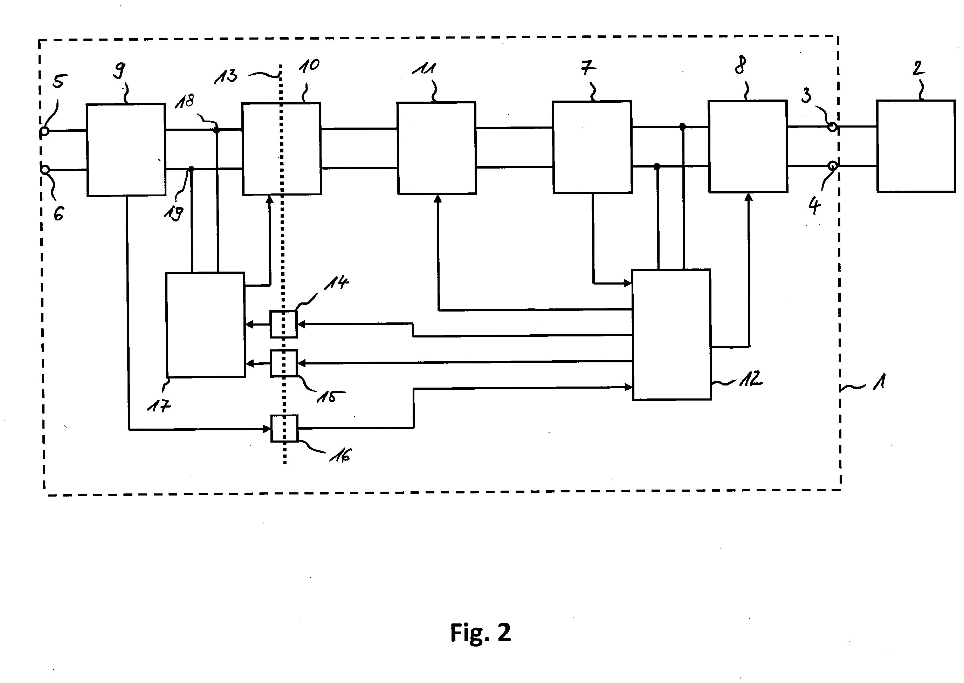

Fig. 2 shows an emergency light system according to a second embodiment of the present invention, in which a flyback converter of the power supply unit 10 provides an isolation barrier 13 between high voltages on a mains supply side and low voltages on a low voltage side (SELV). The rectifier and mains monitoring unit 9 is located on mains supply side and the charging circuitry 11, the energy storage device 7, the LED driver 8 and the control circuit 12 are located on the low voltage side. The control circuit 12 receives and transmits signals from/to the mains supply side via optocoupler 14..15.

The emergency converter 1 shown in Fig. 2 further comprises a latch circuit 17 powered by the DC voltage generated by the rectifier and grid-monitoring unit 9. The latch circuit 17 is configured to generate the control signal to deactivate the power supply unit 10 based on a short pulse signal output by the control circuit 12. Generating the short pulse signal (voltage pulse) instead of a constant signal requires less energy, so the energy storage device 7 (or the battery) needs to be charged less often or can be made smaller.

The control circuit 12 transmits a first pulse signal to the latch circuit 17 via the optocoupler 14 when the power supply unit 10 is to be deactivated and a second pulse signal to the latch circuit 17 via the optocoupler 15 when the power supply unit 10 is to be activated, wherein the latch circuit 17 generates the control signal when the first pulse signal is received and outputs the control signal to the power supply unit 10 until the second pulse signal is received.

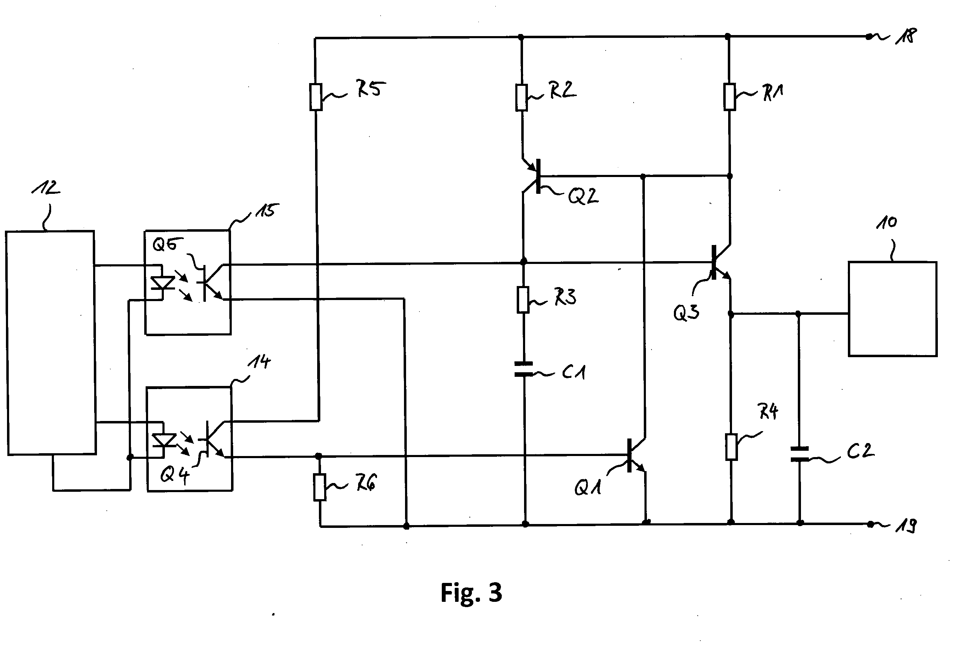

Fig. 3 shows the latch circuit 17 according to an embodiment of the present invention. The latch circuit 17 comprises a first current path consisting of a resistor R1 and a transistor Q1 connected in series, a second current path consisting of a resistor R2, a transistor Q2, a resistor R3 and a capacitor C1 connected in series, a third current path consisting of a transistor Q3 and a resistor R5 connected in series, a fourth current path consisting of a resistor R5, a transistor Q4 of the optocoupler 14 and a resistor R6 connected in series, a fifth current path consisting of a transistor Q5 of the optocoupler 15 and a sixth current path consisting of a capacitor C2.

The first current path, the second current path and the fourth current path are connected in parallel to the output of the rectifier and grid-monitoring unit 9, i.e., the connection points 18, 19. The third current path is connected in parallel to transistor Q1. The fourth current path is connected in parallel to resistor R3 and capacitor C1. The sixth current path is connected in parallel to resistor R4.

When the control circuit 12 transmits a pulse with the first pulse signal to the optocoupler 14, the transistor Q3 is switched on until the second pulse signal is transmited to the optocoupler 15, wherein voltage across resistor R4 and capacitor C1 is the control signal output to the power supply unit 10.

More specifically, when the control circuit 12 transmits the first pulse signal to the optocoupler 14, transistor Q4 is switched on, causing a current flow through resistor R6. The voltage across resistor R6 controls the transistor Q1 so that transistor Q1 is switched on and the voltage across the resistor R1 controls the transistor Q2 so that transistor Q2 is switched on, causing a current flow through resistor R3 and capacitor C1. The voltage at the capacitor C1 increases and controls the transistor Q3 so that transistor Q3 is switched on.

Once the first pulse signal ends, the transistors Q4 and Q1 switch off, whereas transistor Q2 remains on, since turned-on transistor Q3 allows current to flow through resistor R1. When the control circuit 12 transmits the second pulse signal to the optocoupler 15, transistor Q5 is switched on, causing discharge of capacitor C1 and a loss of the control voltage of transistor Q3 so that the transistor Q3 is switched off. The resistors R2 and R5 and capacitors C1 and C2 are optional. The resistor R3 can be a part of the fifth current path and can be connected in parallel to capacitor C1 when transistor Q5 is switched on. Instead of using the resistors R5 and R6, supply voltage of the control means or another reference voltage can be applied to the transistor Q1 when the transistor Q4 is switched on.

The control signal may drive a switch (transistor) that deactivates the power supply unit 10 as long as the control signal is output. This has the advantage that the power supply unit 10 is activated when the emergency converter 1 is put into operation. Alternatively, the power supply unit 10 can be activated as long as the control signal is output, wherein the control circuit 12 transmits the first pulse signal when the power supply unit 10 is to be activated and the second pulse signal when the power supply unit 10 is to be deactivated.

## Claims

1. An emergency converter comprising
an energy storage device (7) and/or an energy storage interface configured to connect the energy storage device (7) to the emergency converter (1),
a first converter circuit (8) configured to provide a supply voltage and/or current to an illuminant (2) using energy stored in the energy storage device (7),
a charging circuit (11) configured to charge the energy storage device (7),
a second converter circuit (10) configured to provide a supply voltage and/or current to the charging circuit (11) using mains supply, and
a control circuit (12) configured to deactivate the second converter circuit (10), to determine whether the energy storage device (7) is to be charged and to activate the second converter circuit (10) when the energy storage device (7) is to be charged, wherein
the emergency converter (1) is configured to supply power to the control circuit (12) using the energy storage device (7) or another energy storage.

2. The emergency converter according to claim 1, wherein
the control circuit (12) is configured to determine, during the second converter circuit (10) is deactivated, whether or not the mains supply fails and to activate the first converter circuit (8) to provide the supply voltage and/or current to the illuminant (2) when the mains supply fails.

3. The emergency converter according to claim 2, further comprising
a wired or wireless interface configured to receive a signal indicating the failure of the mains supply, wherein
the control circuit (12) is configured to determine that the mains supply fails when the signal is received by the wired or wireless interface.

4. The emergency converter according to claim 2 or 3, further comprising
an electrical grid monitoring circuit (9) connected to the mains supply and configured to detected a failure of the mains supply, wherein
the control circuit (12) is configured to determine that the mains supply fails when the failure of the mains supply is detected by the electrical grid monitoring circuit (9).

5. The emergency converter according to any one of the preceding claims, wherein
the control circuit (12) is configured to detect, during the second converter circuit (10) is deactivated, the state of charge of the energy storage device (7) and is configured to determine whether the energy storage device (7) is to be charged based on the detected state of charge.

6. The emergency converter according to any one of the preceding claims, wherein
the energy storage device (7) is to be charged at predetermined time intervals, and
the control circuit (12) comprises a timer configured to generate a start signal at the predetermined time intervals, and
the control circuit (12) is configured to activate the second converter circuit (10) and the charging circuit (11) when the start signal is generated by the timer.

7. The emergency converter according to any one of the preceding claims, wherein
the control circuit (12) is configured to detect, during the second converter circuit (10) is deactivated, a presence of a test request signal, to activate the second converter circuit (10) when the presence of a test request signal is detected and to start a function test or an operation duration test.

8. The emergency converter according to any one of the preceding claims, further comprising
a switch controlled by the control circuit (7) and configured to disconnect the second converter circuit (10) from the mains supply, and/or
a control means configured to control the second converter circuit (10), wherein the control circuit (12) is configured to switch off the control means when the second converter circuit (10) is to be deactivated.

9. The emergency converter according to any one of the preceding claims, wherein
the control circuit (12) is configured to output a first pulse signal when the second converter circuit (10) is to be deactivated and a second pulse signal when the second converter circuit (10) is to be activated, and
the emergency converter (1) further comprises a latch circuit (17) configured to receive the first and the second signal, to output, when the first pulse signal is received, a control signal signaling that the second converter circuit (10) is to be deactivated and to output the control signal until the second pulse signal is received.

10. The emergency converter according to claim 9, further comprising
an isolation barrier (13) between the control circuit (12) and the latch circuit (17),
a first optocoupler (14), relay or transformer configured to transfer the first pulse signal across the isolation barrier (13), and
a second optocoupler (15), relay or transformer configured to transfer the second pulse signal across the isolation barrier (13).

11. The emergency converter according to claim 10, wherein
the second converter circuit (10) comprise a flyback converter providing the isolation barrier (13).

12. The emergency converter according to any one of the claims 9 to 11, further comprising
a rectifier circuit (9) configured to generate DC voltage and DC current from an AC voltage provided by the mains supply and to output the DC voltage at an output (18, 19).

13. The emergency converter according to claim 12, wherein the latch circuit (17) comprises
a first current path of a first resistor (R1) and a first transistor (Q1) connected in series, wherein the first current path is connected in parallel to the output (18, 19) of the rectifier circuit (9) and the first transistor (Q1) is controlled by the first pulse signal,
a second current path of a second transistor (Q2), a second resistor (R3) and a first capacitor (C1) connected in series, wherein the second current path is connected in parallel to the output (18, 19) of the rectifier circuit (9) and the second transistor (Q2) is controlled by the voltage across the first resistor (R1),
a third current path of a third transistor (Q3) and a third resistor (R4) connected in series, wherein the third current path is connected in parallel to the first transistor (Q1), the third transistor (R4) is controlled by a voltage across the first capacitor (C1) and/or the second resistor (R3) and a voltage across the third resistor (R4) is the control signal, and
a fourth transistor (Q5) connected in parallel to the second resistor (R3) and/or the first capacitor (C1), wherein the fourth transistor (Q5) is controlled by the second pulse.

14. The emergency converter according to claim 8 and any one of the claim 9 to 13, wherein
the switch and/or the control means is controlled by the control signal.

15. An emergency luminaire comprising the emergency converter (1) according to any one of the preceding claims.
